# EUROPEAN PATENT APPLICATION

(11) **EP 1 879 348 A1**
(43) Date of publication of application: **16.01.2008**
(21) Application number: 06270067.9
(22) Date of filing: 14.07.2006
(51) Int. Cl.: H04L 29/06, H04L 12/26

(54) **Routing path performance measurement**

(71) Applicant: Agilent Technologies, Inc., Santa Clara, CA 95051 (US)
(72) Inventor: Garcia, Francisco, West Lothian, EH30 9TG (GB); Gardner, Robert, West Lothian, EH30 9TG (GB)
(74) Representative: Kurz, Peter

(57) **Abstract**

A method of communicating a protocol data unit (400) between a first process (214) and a second process (215) comprises locating the first process at a source node (102) in a communications network and locating the second process at the source node (102). The first process (214) is arranged to send the protocol data unit (400) to the second process (215) at an address corresponding to an, at least notional, target node (114, D). The source node (102) comprises a protocol stack arranged to adapt the protocol data unit (400) to include a data structure definition (406) that supports routing path selection, the data structure definition (406) being used to identify a first address corresponding to the source node (102) as a final destination for the protocol data unit (400), the round-trip path including a first intermediate routing address. Subsequently, the adapted protocol data unit (400) leaves the source node (102) and follows a round-trip path back to the source node (102) via an intermediate node (114, D) corresponding to the first intermediate routing address for processing by the second process (215).

## Description

The present invention relates to a method of providing a communication of the type, for example, comprising communicating a protocol data unit from a first process located at a first node to a second process. The present invention also relates to a system for providing a communication of the type, for example, comprising communicating a protocol data unit from a first process at a first node to a second process. The present invention also relates to a network node apparatus of the type, for example, that comprises a first process arranged to communicate a protocol data unit to a second process.

A data communications network, for example an Internet Protocol (IP) network, comprises a plurality of interconnected network elements constituting nodes. So-called "packets" of data are typically sent by a source node in the IP network to a destination node in the IP network, usually via one or more intermediate nodes connected in a communications path between the source and destination nodes. The communications path is known as a routing path.

In the field of network performance measurement, it is desirable to measure performance of the routing path, a protocol implementation or an application. In relation to the performance of the routing path, it is known to achieve this aim by measuring, for example, end-to-end performance metrics of packets actively sent from the source node to the destination node. Such testing constitutes a so-called active measurement technique, whereby test traffic, in the form of a series of measurement packets, is injected into the network, the measurement packets having characteristics suited to testing specific attributes of the network, for example: packet delay, packet loss, packet delay variation and/or overall packet throughput. One way to realise such testing is to provide a first application at the source node and arrange the first application to send the series of measurement packets to a second application at the destination node. The first and second applications can, for example, include a File Transfer Protocol (FTP) application for bulk file transfer, a Voice-over-IP (VoIP) application for packet-based voice telephony, or applications for delivery of other streamed media, or a bespoke network test and measurement application

However, in order to make end-to-end, active, measurements across the network, it is necessary to instrument both the source node and the destination node with measurement functionality. Whilst the source node can be assumed to be local and under the control of a user conducting the measurement, it may not be possible to instrument the destination node. In this respect, the destination node can be a router in the network that lacks an execution environment capable of supporting measurement functionality, or a remote host under the control of a third party. In any event, instrumentation of the destination node can be difficult, inconvenient, detrimental to network performance and/or time consuming.

According to a first aspect of the present invention, there is provided a method of providing a communication between a first process and a second process, the first process being at a source node, and the second process being at the source node in place of at a second node, the method comprising: providing the first and second processes at the source node; the first process initiating generation of a protocol data unit identifying a first address corresponding to the source node as a source address; adapting the protocol data unit prior to departure thereof so as to include a first data structure definition for supporting routing path selection; using the first data structure definition to part-specify a round-trip path, the round-trip path including a first intermediate routing address and having the first address corresponding to the source node as a destination of the protocol data unit; and the protocol data unit subsequently following the round-trip path to the source node via a first intermediate node corresponding to the first intermediate routing address.

It should be understood that references herein to a "destination" of the protocol data unit in relation to data structure definitions for supporting routing path selection refer to a final destination of the protocol data unit. The target node is a node to which the protocol data unit is addressed prior to adaptation of the protocol data unit. In some embodiments, when the protocol data unit is generated, the protocol data unit is addressed to the target node and/or the first intermediate routing address is not represented in the data structure definition.

The communication may be a test communication between the first and second processes.

The first intermediate node may be the, at least notional, target node.

The first node may support a protocol stack.

The protocol data unit may be modified by at least part of a protocol stack after receipt of the protocol data unit, the modified protocol data unit being subsequently processed by the second process.

The method may further comprise: adapting the protocol data unit after receipt thereof by the source node so as to replace the first address identified as the source address with a target address corresponding to the, at least notional, target node.

The address corresponding to the second node may be located in a part of the protocol data unit conforming to the first data structure definition for supporting the routing path selection.

The method may further comprise: the second process initiating generation of another protocol data unit identifying the first address as the source address; adapting the another protocol data unit prior to departure thereof so as to include a second data structure definition for supporting the routing path selection; using the second data structure definition to part-specify another round-trip path, the another round-trip path having the source address corresponding to the source node as the destination of the another protocol data unit; and the another protocol data unit subsequently following the another round-trip path from the source node back to the source node.

The another protocol data unit may be generated in response to receipt of the protocol data unit.

The another round-trip path may be a reverse round-trip path with respect to the round-trip path.

The another protocol data unit may be modified by the at least part of the protocol stack after receipt of the another protocol data unit, the modified another protocol data unit being subsequently processed by the first process.

The target address corresponding to the, at least notional, target node may be located in a part of the another protocol data unit received conforming to the second data structure definition for supporting the routing path selection.

The method may further comprise: adapting the another protocol data unit after receipt thereof by the source node so as to replace identification of the first address as the source address with the target address corresponding to the, at least notional, target node.

The protocol stack may have a number of layers; the protocol data unit and/or the another protocol data unit may be adapted between first functionality supporting a first layer of the protocol stack and second functionality supporting a second layer of the protocol stack.

The first layer may be a link layer and the second layer may be a network layer.

The method may further comprise: selecting the protocol data unit prior to adapting the protocol data unit.

The protocol data unit may be selected based upon one or more attributes of the protocol data unit selected from: the source address; the target address; a next header type; a payload type; prior presence of a selected routing path, a flow label, a traffic class, a transport layer port number; and/or an inter-arrival time.

The method may further comprise: selecting the another protocol data unit prior to adapting the another protocol data unit.

The another protocol data unit may be selected based upon one or more attributes of the another protocol data unit from: the source address; the target address; a next header type; a payload type; prior presence of a selected routing path, a flow label, a traffic class, a transport layer port number; and/or an inter-arrival time.

The method may further comprise: after receipt of the protocol data unit, removing a part of the protocol data unit conforming to the first data structure definition for the routing path selection.

After receipt of the another protocol data unit, a part of the another protocol data unit conforming to the second data structure definition for routing path selection may be removed.

The method may further comprise: including a second intermediate routing address in a part of the protocol data unit conforming to the first data structure definition for the routing path selection, thereby specifying a second intermediate node additional to the first intermediate node in the round-trip path.

The second intermediate routing address may be included in a part of the another protocol data unit conforming to the data structure definition for the routing path selection, thereby specifying the second intermediate node in the another round-trip path.

According to a second aspect of the present invention, there is provided a method of testing performance of a networking application comprising the method of providing a communication as set forth above in relation to the first aspect of the invention.

According to a third aspect of the present invention, there is provided a method of providing a communication between a first process and a second process, the first process being at a source node, and the second process being at the source node in place of an, at least notional, target node, the method comprising: providing the first and second processes at the source node; the first process initiating generation of a protocol data unit identifying a second address corresponding to the, at least notional, target node as a target address; adapting the protocol data unit prior to departure and after receipt thereof so as to cause the protocol data unit to follow a round-trip from the source node via an intermediate node, but appear to the second process to have been sent from a second address corresponding to the, at least notional, target node.

It should be appreciated that this third aspect of the present invention can be combined, where possible, with any features recited hereinbefore that are combinable with the first aspect of the present invention.

According to a fourth aspect of the present invention, there is provided a computer program element comprising computer program code means to make a computer execute the methods as set forth above in relation to the first, second and/or third aspects of the invention. The computer program element may be embodied on a computer readable medium.

According to a fifth aspect of the present invention, there is provided a system for providing a communication, the system comprising: a source node supporting, when in use: a first process, arranged to initiate generation, when in use, of a protocol data unit identifying a first address corresponding to the source node as a source address; a protocol stack; and an outbound adaptation module arranged to adapt, when in use, the protocol data unit prior to departure thereof so as to include a first data structure definition for supporting routing path selection, the outbound adaptation module using the first data structure definition to part-specify a round-trip path including a first intermediate routing address and having the first address corresponding to the source node as a destination of the protocol data unit so that the protocol data unit subsequently follows the round-trip path to the source node via a first intermediate node corresponding to the first intermediate routing address, thereby providing the communication between the first process and the second process , the first process being located at the source node and the second process being located at the source node in place of at an, at least notional, target node.

According to a sixth aspect of the present invention, there is provided a network node apparatus comprising: a first process arranged to initiate, when in use, generation of a protocol data unit identifying a first address corresponding to the network node apparatus as a source address; a protocol stack; and an outbound adaptation module arranged to adapt, when in use, the protocol data unit prior to departure thereof so as to include a first data structure definition for supporting routing path selection, the outbound adaptation module using the first data structure definition to part-specify a round-trip path including a first intermediate routing address and having the first address corresponding to the network node apparatus as a destination of the protocol data unit so that the protocol data unit subsequently follows the round-trip path to the network node apparatus via a first intermediate node corresponding to the first intermediate routing address, thereby providing a communication between the first process and the second process, the first process being located at the network node apparatus and the second process being located at the network node apparatus in place of at an, at least notional, target node.

It is thus possible to provide a method, apparatus and system capable of extending a communications path from the source node to the first , intermediate node and back to the source node in a manner that is transparent to layers of the communications stack above the Network layer, for example the Application layer. Additionally, the, at least notional, target node and/or the first intermediate node do not have to be instrumented to provide support for applications, for example the second process. Consequently, in circumstances where the, at least notional, target node and/or the first intermediate node are under the control of a different (third) party to that of the source node, establishment of measurement communications is still possible. Further, processing overhead to the source node required to support the method, apparatus and system is minimal. Also, measurements made at the end of the communications path or the another communications path do not need to be conveyed by either the source node or the target node and/or the first intermediate node to a remote node participating in a measurement function.

At least one embodiment of the invention will now be described, by way of example only, with reference to the accompanying drawings, in which:
**Figure 1** is a schematic diagram of part of a communications network;
**Figure 2** is a schematic diagram of a processing resource of a first node constituting a first embodiment of the invention;
**Figure 3** is a flow diagram of a method of emulating a measurement communication using the processing resource of Figure 2;
**Figure 4** is a schematic diagram of a data structure definition of protocol data units formed by the processing resource of Figure 2;
**Figure 5** is a flow diagram of a method used in conjunction with the method of Figure 3 in a second embodiment of the invention; and
**Figure 6** is a schematic diagram of a manipulation of the data structure definition of Figure 4.

Throughout the following description identical reference numerals will be used to identify like parts.

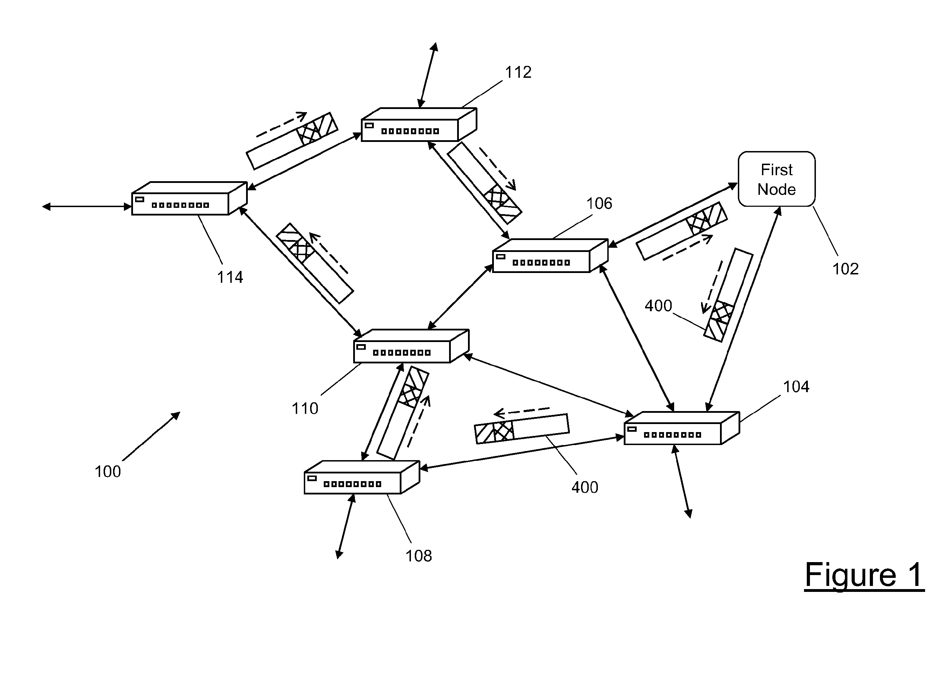

Referring to Figure 1, a part of a communications network 100, for example the Internet, comprises a first, or source, node 102 coupled to a first intermediate node 104 and a second intermediate node 106. The communications network 100 is an Internet Protocol (IP) network, in particular an IPv6 network.

The first intermediate node 104 is coupled to a third intermediate node 108 as well as the second intermediate node 106 and a fourth intermediate node 110. Both the second intermediate node 106 and the third intermediate node 108 are also coupled to the fourth intermediate node 110, the second intermediate node 106 also being coupled to a fifth intermediate node 112. Both the fourth and fifth intermediate nodes 110, 112 are coupled to a sixth intermediate node 114. In this example, the sixth intermediate node 114 is a node to which packets are to be sent as part of a measurement process.

Although reference is made herein to "nodes", the skilled person will appreciate that the nodes can be hosts, routers, or other network elements with routing and forwarding capabilities, dependent upon the functionality required of the network element at a particular location of the network element in the communications network 100. In this example, the intermediate nodes 104, 106, 108, 110, 112, 114 are routers supporting IPv6 protocol functionality.

In this example, the operation of the first node 102 is modified to perform certain functionality as is described hereinbelow. In contrast, the sixth intermediate node 114 is not, in this example, modified and is a router that performs normal routing and forwarding functionality expected of a router.

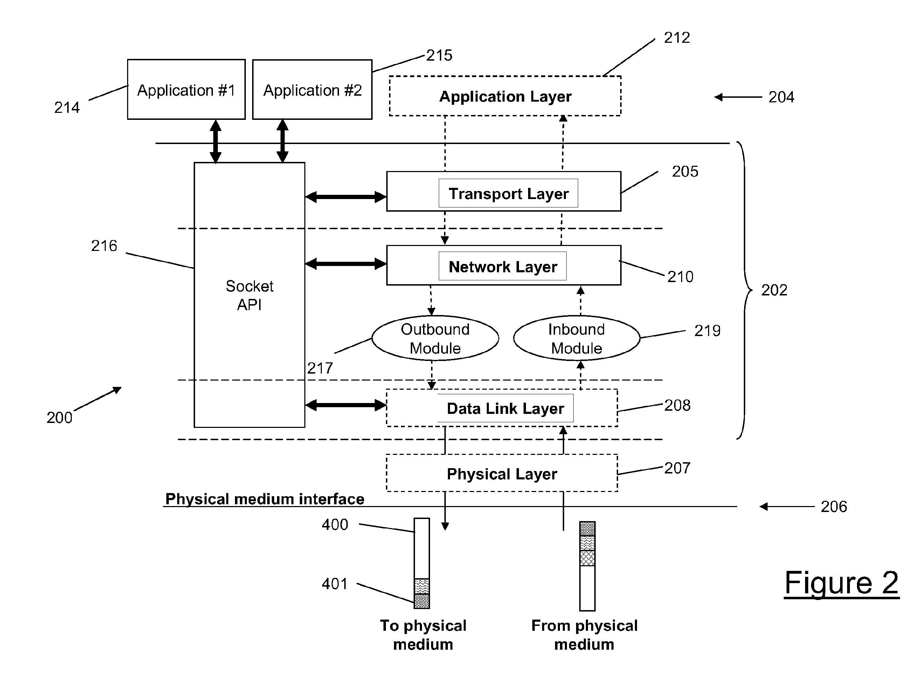

Referring to Figure 2, the first node 102 comprises a processing resource 200 consisting of, inter alia, at least one microprocessor (not shown), a volatile memory (not shown), for example a Random Access Memory (RAM), a non-volatile memory (not shown), for example a Read Only Memory (ROM). A Linux operating system runs on the processing resource 200, the Linux operating system supporting a kernel space 202, a part of the processing resource 200 being reserved for supporting a protocol stack. In this example, the protocol stack is implemented according to appropriate layers in the Open System Interconnection (OSI) seven-layer Reference Model. Additionally, the processing resource 200 supports a user space 204, a part of the processing resource 200 reserved for the execution of user applications, for example a video streaming server. The processing resource 200 also supports a physical medium interface 206.

In relation to the protocol stack, the protocol stack comprises, inter alia, a Data Link layer 208, and a Network layer 210, as well as: upper layers, for example a Transport layer 211 and an Application layer 212 (and other layers), and a Physical layer 207 between the Data Link layer 208 and the physical medium interface 206.

Amongst the applications residing in the user space 204, there is a first application 214 for injecting packets into the communications network 100. In this example, the first application is a streamed media player, for example a so-called "Helix Player" available from player.helixcommunity.org. The Helix Player comprises a measurement module for providing to a user of the application statistical information concerning, for example, packet loss. Consequently, the first application 214 is a first process that performs, inter alia, a measurement function in order to measure an aspect of performance of the communications network 100, for example, the packet loss mentioned above. A second application 215 is, in this example, a streamed media server capable of responding to a request for near real-time content delivery. The second application 215 is also supported in the user space 204 and is, in this example, a second process that supports functionality that receives requests for streamed media and responds to such requests by sending streams of packets to the first application 214 when requested to do so.

The kernel space 202 supports a socket Application Programming Interface (API) implemented, in this example, as a set of system calls that interact directly with the kernel space 202. The socket API 216 serves as a protocol-independent interface to protocol-dependent layers that reside in the protocol stack. In this example, the socket API 216 operates in accordance with RFC 2553 ("Basic Socket Interface Extensions for IPv6") and RFC 3542 ("Advanced Sockets Application Program Interface (API) for IPv6"). Further, whilst some operating systems only partially implement the socket API as described in RFC 2553 and RFC 3542 using socket options and ancillary data, it is still nevertheless possible for a user to implement the full functionality of RFC 3542 using the kernel space 202. In the present example, the kernel space 202 implements the full functionality of the socket API. In relation to other operating systems, the socket API can be implemented as library functions.

In order to interact with the Transport layer 211 and the Network layer 210, the first application 214 and the second application 215 use the socket API provided by the socket API 216. Additionally, in order to support functionality described later herein, an outbound adaptation module 217 is provided between the Network layer 210 and the Data Link layer 208. In this example, an inbound adaptation module 219 is also provided between the Network layer 210 and the Data Link layer 208. However, it should be appreciated that the inbound adaptation module 219 is not essential for all embodiments.

In this example, the outbound adaptation module 217 and the inbound adaptation module 219 are supported by a Unix environment with user-defined dynamically loadable kernel modules that interface with respective points in the kernel protocol stack via appropriately located kernel "hooks" that are pre-compiled into the kernel protocol stack. Alternatively, the modifications and extensions can be achieved by applying a patch to source code of the kernel protocol stack and then recompiling the kernel. However, whilst Unix-based kernels can be employed, it is possible to use dynamically linkable libraries, available for other kernels such as various versions of Microsoft^{®} Windows^{™}, to achieve the same functionality as described herein.

The outbound adaptation module 217 is capable of receiving packets to be passed from the Network layer 210 to the Data Link layer 208, the outbound adaptation module 217 being capable of adapting received packets prior to passing the packets to the Data Link layer 208 for sending. Analogously, the inbound adaptation module 217 is capable of receiving packets to be passed from the Data Link layer 208 to the Network layer 210 after receipt thereof, the inbound adaptation module 219 also being capable of adapting received packets prior to passing the packets to the Network layer 210 for subsequent processing by the second process.

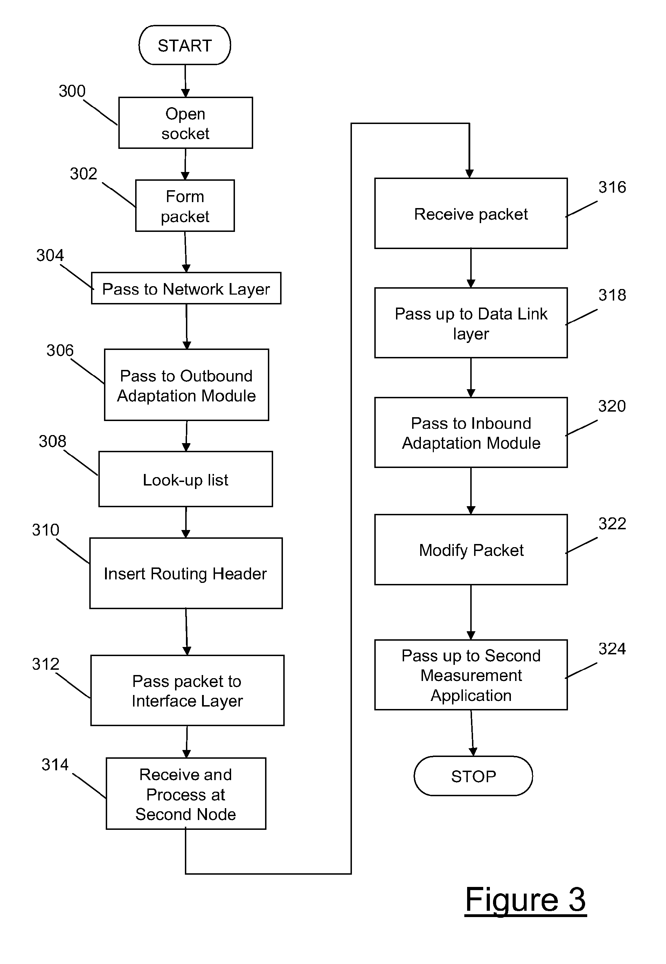

In operation (Figure 3), the first application 214, in this example the Helix Player, is operated to request media to be streamed from the second application 215. User operation of the Helix Player and subsequent negotiation between the Helix Player and the streamed media server is known in the art and so will not be described herein in detail.

Once suitable streamed media has been selected, and this can be a sample audio-visual file for testing purposes, the Helix Player communicates a request to the streamed media server, namely the second application 215 in this example, the request being in the form of one or more packet. For the sake of clarity and conciseness of description, communication of a single packet from the first application 214 to the second application 215 will now be described.

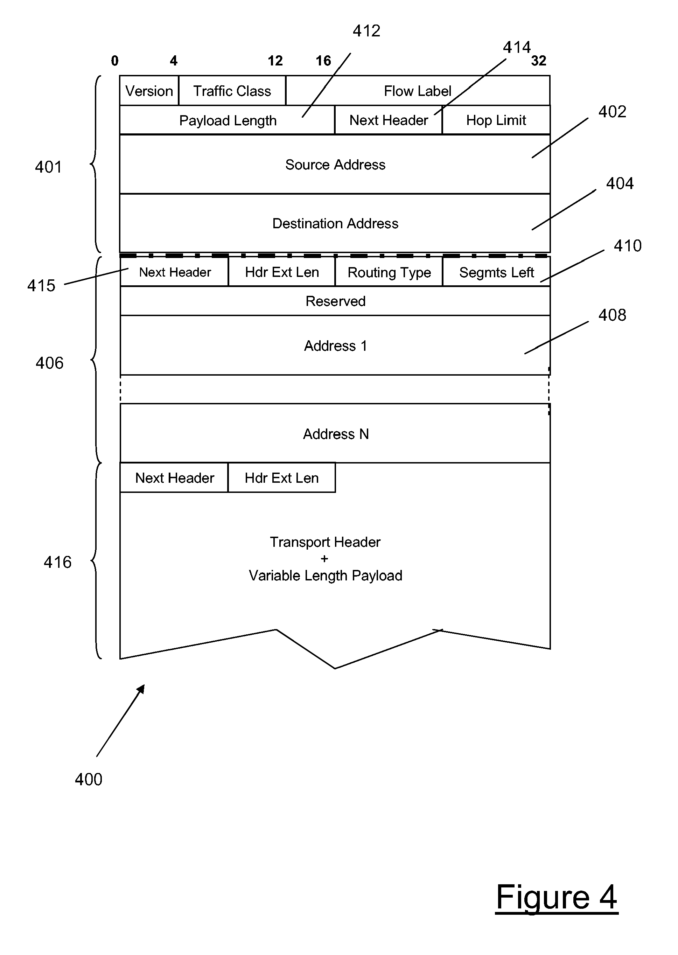

In order to form the packet, the first application 214 uses the socket API 216 to open up a socket (Step 300) to the protocol stack. Through the socket, the first application 214 instructs the protocol stack to form (Step 302) the first packet 400 (Figure 4) having an IPv6 fixed-size header 401, the first packet being formed in accordance with a known technique for forming packets using a socket API and so will not be described further herein.

The first packet 400 is formed bearing a first IP address, corresponding to the first node 102, in a source address field 402 of the IPv6 header 401. The first packet 400 is also addressed to the sixth intermediate node 114 by including a second IP address, corresponding to the sixth intermediate node 114, in a destination address field 404 of the IPv6 header 401. The first IP address and the second IP address are passed to the protocol stack by the first application 214 as parameters, using the socket API 216, for inclusion in the IPv6 header 401 of the first packet 400.

The first packet 400 is then passed down (Step 304) through the protocol stack to the Network layer 210. After processing by the Network layer 210, the Network layer 210 passes (Step 306) the first packet 400 to the outbound adaptation module 217. The outbound adaptation module 217 maintains a list (not shown) of ports, and IP addresses of nodes, corresponding to applications that the first application 214 expects to reside remotely, but where the counterpart applications are, in fact, supported at the first node 102, for example the port number of the second application 215 and the second IP address corresponding to the sixth intermediate node 114. Hence, the outbound adaptation module 217 initially identifies the first packet 400 as relating to the first application 214 by firstly establishing the existence of a User Datagram Protect (UDP) header in the first packet 400, and then examining a source UDP port and a destination UDP port specified in the transport (UDP) header of the first packet 400 as well as the destination address field 404 of the IPv6 header 401. Thereafter, the outbound adaptation module 217 determines (Step 308) whether the source port, the destination port and the destination IP address specified in the first packet 400 are contained in the list. Of course, the skilled person will appreciate that other combinations of identifiable fields of packets can be used to identify whether packets passing through the outbound adaptation module 217 relate to the first application 214, and to determine whether IP addresses in the destination address fields of the packets relate to a process that is expected by the first application 214 to reside at a node other than the first node 102, but in fact does resides at the first node 102. In this example, all processes with which the first application 214 communicates can be deemed to reside at the first node 102. Other, sometimes additional, criteria can also be employed as a basis for assessing suitability of the first packet 400, for example, a next header type, a payload type, prior presence of a selected routing path, packet length and/or an inter-arrival time.

Since the first application 214 is sending the first packet 400 to the second application 215 based upon an expectation that the second application 215 resides at the sixth intermediate node 114, the IP address of the sixth intermediate node 114 and the destination port corresponding to the second application 215, as mentioned above, are contained in the list. The outbound adaptation module 217 therefore adapts (Step 310) the first packet 400 in response to finding, in the list, the above-mentioned information in the first packet 400 that corresponds to an expectation by the first application 214 that the second application 215 resides at the sixth intermediate node 114. The outbound adaptation module 217 adapts the first packet 400 by inserting an IPv6 Type 0 routing header 406 (Step 310) in the first packet 400 to follow the fixed-size IPv6 header 401. When inserting the routing header 406, the outbound adaptation module 217 includes a first routing IP address in a first address field 408 of the routing header 406. In this respect, the first routing address is the first IP address mentioned above that corresponds to the first node 102, i.e. as contained in the source address field of the first packet 400, and constitutes a part-specification of a round-trip path. The first routing address constitutes a destination of the first packet 400 for routing purposes, the sixth intermediate node 114 being a "target" or first hop of the first packet 400 rather than the destination. A "segments left" field 410 of the packet 400 is also included to reflect the inclusion of the first routing IP address in the first packet 400.

Additionally, a payload length field 412 of the IPv6 header 401 is updated by the outbound adaptation module 217 to reflect the increase in size of the first packet 400 due to the insertion of the routing header 406. A first next header field 414 of the IPv6 header 401 and a second next header field 415 of the routing header 406 are also updated in accordance with RFC 2460 to properly integrate the routing header 406 into the first packet 400. The routing header 406 of the first packet 400 is followed by a transport header 416, in this example a User Datagram Protocol (UDP) header, the transport header 416 being followed by a variable length payload.

After incorporation of the routing header 406, the first packet 400 is passed (Step 312) to the Data Link layer 208, the first packet 400 then leaves the first node 102 via the Physical layer 207 and is routed and forwarded to the sixth intermediate node 114.

Upon receipt of the first packet 400, the sixth intermediate node 114 examines the received first packet 400, establishes the existence of the routing header 406 and exchanges (Step 314) the content of the first address field 408, namely the first routing IP address corresponding to the first node 102, with the content of the destination address field 404, namely the second IP address. Additionally, the segments left field 410 of the routing header 406 is decremented by unity. Of course, the skilled person will appreciate that the above-described processing of the routing header 406 is in accordance with, and part of, normal IPv6 functionality implemented by the protocol stack of the sixth intermediate node 114.

The sixth intermediate node 114 then routes and forwards the first packet 400 to the first node 102 due to the presence of the first routing address in the destination address field 404, thereby causing the first packet 400 to complete the round-trip path back to the first node 102.

Upon receipt (Step 316) of the first packet 400 back at the first node 102, the first packet 400 is passed up (Step 318) to the Data Link layer 208, whereafter the first packet 400 is passed (Step 320) to the inbound adaptation module 219. The inbound adaptation module 219 then recognises the first packet 400 as having been previously modified by the outbound adaptation module 217 due to the presence of the source UDP port, the destination UDP port, and (taking into account transposition of IP addresses in the first packet 400) the content of the first address field 408 of the routing header 406. In this respect, the list used by the outbound adaptation module 217 is, in this example, used by the inbound adaptation module 219 to recognise the first packet 400 as having been previously modified by the outbound adaptation module 217. For the sake of clarity, upon receipt of the first packet 400 back at the first node 102, the routing header 406 contains the second IP address corresponding to the sixth intermediate node 114, which was previously present in the destination address field 404 prior to departure of the first packet 400 from the first node 102, whilst the source address field 402 of the first packet 400 contains the first IP address, corresponding to the first node 102. After recognising the first packet 400 as having been previously adapted, the inbound adaptation module 219 replaces (Step 322) the first IP address present in the source address field 402 of the IPv6 header 401 with the content of the first address field 408 appearing in the routing header 406, in this example the second IP address corresponding to the sixth intermediate node 114. The inbound adaptation module 219 also optionally removes the Type 0 routing header 406 from the first packet 400, ensuring appropriate changes to the payload length field 412 and the next header fields 414, 415 of the first packet 400.

Once the first packet 400 has been modified, the first packet 400 is passed up the protocol stack where parts of the first packet 400 are removed, resulting in a part of the first packet 400 reaching the second application 215 for subsequent processing.

In this example, the second application 215 is arranged to receive the first packet 400 (and any subsequent packets sent by the first application as part of the request for streamed media) and respond to the request. Additionally, a negotiation process known in the art is supported by both the first and second applications 214, 215 in order to establish a Real-Time Streaming Protocol (RTSP) with Real-Time Transport Protocol (RTP) session. Again, for the sake of conciseness and clarity of description, communications responsive to the first application 214 will now be described in the context of one of the many packets sent by the second application 215 to the first application, i.e. a second packet. The second packet is, in this example, intended for receipt by the first application 214 and sent to the first application 214 based upon an expectation that the first application 215 resides at the sixth intermediate node 114. The second packet is formed using the socket API technique mentioned above in relation to the first packet 400. Consequently, when the second packet is generated it, like the first packet 400, also initially bears the second IP address, corresponding to the sixth intermediate node 114, in the destination address field. The second packet is passed down the protocol stack and processed by the outbound adaptation module 217 in substantially the same way as the first packet 400 and so this processing will not be described further herein. However, it should be appreciated that, in this example, due to the presence of a transport header in the second packet, the outbound adaptation module 217 is capable of recognising packets sent by the second application 215 in response to packets received from the first application 214. In this respect, the outbound adaptation module 217 identifies instances of the content of a source port field and a destination port field of packets being in a transposed state with respect to the content of the source and destination port fields of packets sent by the first application 214 to the second application 215. This capability is particularly useful where it is necessary to assign, to a packet that is in reply the first packet 400, a path that is the reverse of a path followed by the first packet 400.

Upon receipt of the second packet by the first node 102, the processing by the inbound adaptation module 219 does not differ in nature, though again the fact that the second packet is in reply to the first packet 400 can be recognised by the inbound adaptation module 219 using the same mechanism of detecting transposed UDP ports employed above by the outbound adaptation module 217. However, it should be noted that, in this example, the second packet is intended to follow a reverse round-trip path back to the first node 102 via the sixth intermediate node 114. However, due to the involvement of two nodes only in the routing header 406, the reverse path is the same as the forward path. Thereafter, the second packet is passed up through the protocol stack where parts of the second packet are removed, resulting in a part of the second packet reaching the first application 214 for subsequent processing. The subsequent processing, in this example, is the measurement module that is part of the first application 214 for providing the performance statistics to the user mentioned above.

Of course, once the negotiation of the RTSP with the RTP session has been completed, packets of data constituting streamed media are subsequently sent by the second application 215 to the first application 214. Again, the packets of data are re-directed in the same way as the second packet is described above as being re-directed along the reverse round-trip path.

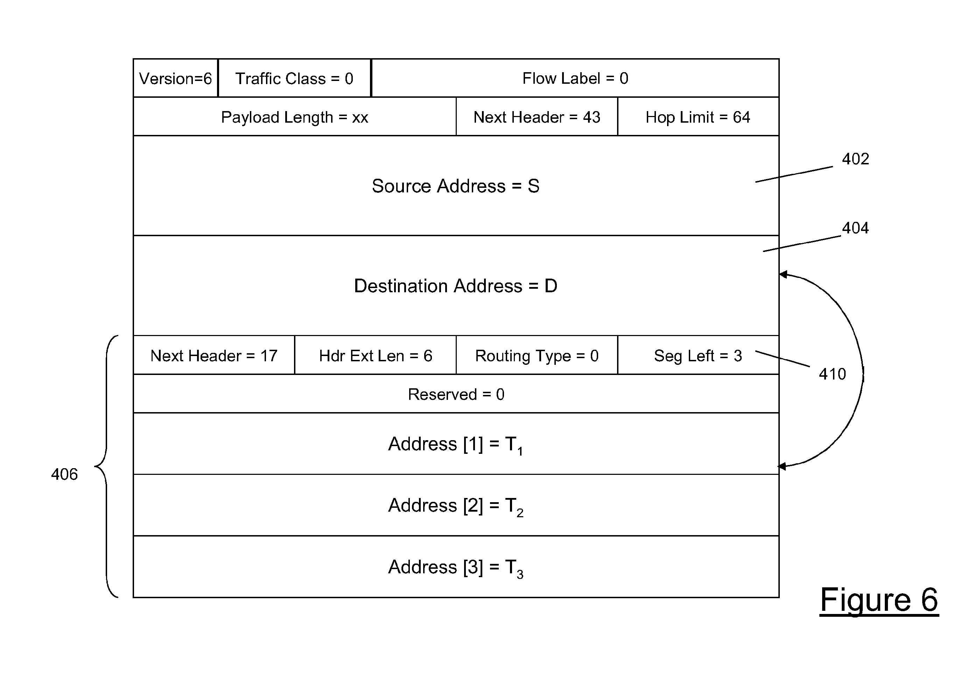

In another embodiment, the first packet 400 is made to follow a predetermined round-trip path from the first, or source, node 102 back to the first node 102 via a predetermined series of the intermediate network nodes. In this example, the predetermined round-trip path requires the first packet 400 to pass via the first intermediate node 104, the fourth intermediate node 110 and the second intermediate node 106. Consequently, when the outbound adaptation module 217 is adding and populating the routing header 406 in the manner described above in relation to the previous embodiment, the routing header 406 is populated with a first routing address, T₁, corresponding to the fourth intermediate node 110, a second routing address, T₂, corresponding to the second intermediate node 106, and a third routing address, T₃, corresponding to the first node 102. The first, second and third routing addresses T₁, T₂, T₃ constitute a queue of routing addresses for part-specifying the round-trip path. Referring to Figure 6, the source address field 402 of the first packet 400 is set to the first IP address S, corresponding to the first node 102, and the destination field 404 of the first packet 400 is set to a first hop IP address, D, corresponding to the first intermediate node 104. The list mentioned above in relation to the previous embodiment is again used to record packets to be modified by the outbound adaptation module 217. However, the list is supplemented with the identities of nodes in the round-trip path, excluding in this example the identity of the first node 102. The segments left field 410 of the first packet 400 is also appropriately set to reflect the inclusion of the first, second and third routing IP addresses T₁, T₂, T₃ in the first packet 400.

For the purpose of providing the first application 214 with an address to use when identifying a destination IP address in the destination address field 404 of the first packet, a target IP address can be set in order for the first application 215 to have an IP address to which packets can be addressed. The target IP address can also be an invalid IP address provided the routing table of the first node 102 is altered to include the invalid IP address. The invalid IP address can be an IP address that has been correctly formed but not allocated to other nodes in the network as "known" to the first node 102 and hence corresponds to a "notional" node. The use of the invalid IP address can usefully serve as a way of identifying packets that have to be or have been altered in order to follow the round-trip path. In order to retain such an identifier, it can be recorded as a final hop in the routing header 406, or another identifier can be stored in a flow label field or a traffic class field of the IPv6 header.

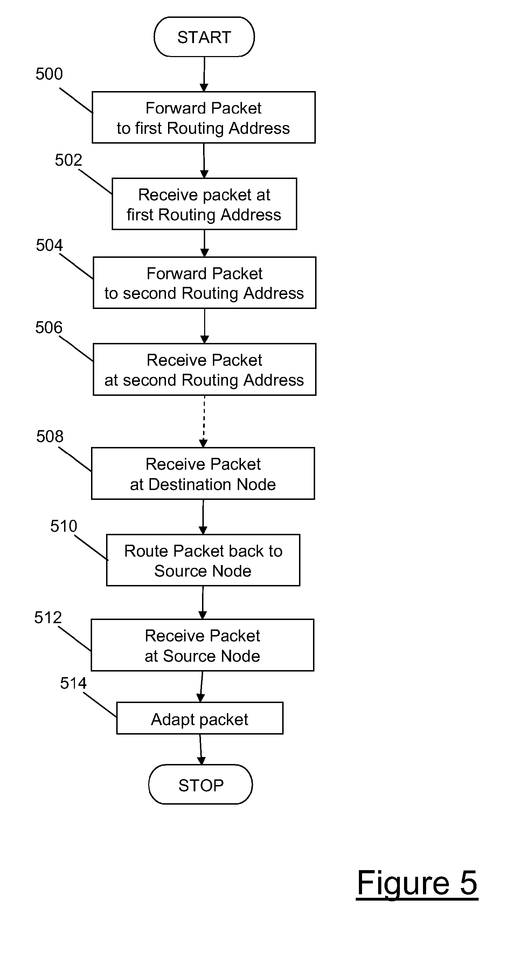

Referring to Figure 5, after the first packet 400 has been adapted by the outbound adaptation module 207, the first packet 400 is routed and forwarded (Step 500) to the first hop address, D, corresponding to the first intermediate node 104. Thereafter, the first intermediate node 104 receives (Step 502) the first packet 400, whereupon the first intermediate node 104 recognises that the segments left field 404 is non-zero and so replaces the first hop address D, residing in the destination address field 404 with the first routing address, T₁, from the routing header and places the first hop address, D, in the place in the queue of routing addresses vacated by the first routing address, T₁. Additionally, the segments left field 410 of the first packet 400 is decremented by unity. The first packet 400 is then routed and forwarded (Step 504) to the fourth intermediate node 110 corresponding to the first routing address, T₁. The above described functionality in relation to the first intermediate node 104 is simply the normal functionality performed by a router and so it should be appreciated that the first intermediate node is not provided with any additional functionality specifically to support the product loss measurement.

Thereafter, the first packet 400 is received (Step 506) by the fourth intermediate node 110. The fourth intermediate node 110 recognises that the segments left field 404 is non-zero and so replaces the first routing address T₁, residing in the destination address field 404 with the second routing address, T₂, from the routing header 406 and places the first routing address, T₁, in the place in the queue of routing addresses vacated by the second routing address, T₂. Additionally, the segments left field 404 of the first packet 400 is again decremented by unity. The first packet 400 is then routed and forwarded to the second intermediate node 106 corresponding to the second routing address, T₂.

The first packet 400 subsequently reaches (Step 508) the second intermediate node 106, whereupon the second intermediate node 106 recognises that the segments left field 404 is non-zero and so a final routing address, namely the third routing IP address, T₃, corresponding to the first node 102, only remains. Once again, the above described procedure for manipulating the destination address field 404 is performed in relation to the content of the destination address field 404, namely the second routing address, T₂, is exchanged with the third routing address, T₃, corresponding to the first node 102. In this respect, the destination address field 404 is set to the third routing IP address, T₃, stored in the routing header 406 and the place of the third routing IP address, T₃, previously occupied in the routing header 406 is filled by the second routing address, T₂, previously stored in the destination address field 404. Thereafter, the second intermediate node 106, in accordance with the normal routing and forwarding behaviour of the second intermediate node 106, routes and forwards (Step 510) the first packet 400 to the first node 102.

Once the first packet 400 has been received (Step 512) back at the first node 102, the inbound adaptation module 219 recognises the first packet 400 as having been previously modified by the outbound adaptation module 217 using a combination of, for example, at least two of the following suitable filter criteria: source port, destination port, source address, destination address, and/or content of the routing header 406. However, the skilled person will appreciate that any other suitable filter criteria can be employed. The list used by the outbound adaptation module 217 is, in this example, used in conjunction with the above mentioned filter criteria by the inbound adaptation module 219 to recognise the first packet 400 as having been previously modified by the outbound adaptation module 217. After recognising the first packet 400 as having been previously adapted, the inbound adaptation module 219 adapts the first packet 400 (Step 514) by replacing the first IP address present in the source address field 402 of the IPv6 header 401 with the IP address selected by the first application 214 to reside in the destination address field 404, namely the first hop address, D. If the destination IP address set by the first application 214 is not stored in the routing header as the final hop, the destination IP address can be pre-stored by the outbound adaptation module 217 in the list for retrieval by the inbound adaptation module 219. The inbound adaptation module 219 also optionally removes the Type 0 routing header 406 from the first packet 400, ensuring appropriate changes to the payload length field 412 and the next header fields 414, 415 of the first packet 400.

In an analogous manner to that described above in relation to the previous embodiment, the second application 215 can send the second packet in response to the first application 214. As mentioned above, a record is kept, in this example, of the source UDP port and the destination UDP port associated with the previously received first packet 400 along with the round-trip path followed. Consequently, when the second packet is found by the outbound adaptation module 217 to bear the source UDP port as a destination port of the second packet and the destination UDP port as the source port of the second packet, the second packet is deemed by the outbound adaptation module 217 to have been sent in reply to the first packet 400, i.e. the UDP ports are in a transposed state as described above in relation to the previous embodiment. The routing header 406 is then populated, using the list mentioned above, so that the second packet follows the round-trip path in reverse. The routing header 406 is therefore populated with the first, second and third routing addresses, but corresponding to the fourth intermediate node 106, the first intermediate node 110 and the first node 104, respectively. The first hop address borne by the destination address field of the second packet corresponds to the second intermediate node 106. It should, however, be appreciated that in this, and the previous, embodiment the sending of the second packet in response to receipt of the first packet 400 is not mandatory and is dependent upon the type of measurement being made by the first and second applications 214, 215.

The above embodiments can be employed to test performance of the communications network, for example for benchmarking purposes. The embodiments can also be employed to assist in development of and/or testing performance of protocol implementations and/or networking applications for use in relation to an existing communications network, in particular, but not exclusively in relation to an existing network path.

Although the above embodiments have been described in the context of packet communications, it should be appreciated that the term "packet" is an example of a protocol data unit that can be used in relation to the above embodiments. Further, other types of protocol data units can be employed, for example: datagrams, frames, and cells and so these terms should be understood to be interchangeable.

Although the above embodiments have been described in the context of IPv6, the skilled person will appreciate that the above described techniques can be applied in the context of other communications protocols that support source-based routing.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

## Claims

1. A method of providing a communication between a first process and a second process, the first process (214) being at a source node, (102) and the second process (215) being at the source node in place of at an, at least notional, target node (114, D), the method **characterised by**:
providing the first and second processes (214, 215) at the source node (102);
the first process initiating generation (300, 302) of a protocol data unit (400) identifying a first address corresponding to the source node (102) as a source address;
adapting (310) the protocol data unit (400) prior to departure thereof so as to include a first data structure definition (406) for supporting routing path selection;
using (310) the first data structure definition (406) to part-specify a round-trip path, the round-trip path including a first intermediate routing address and having the first address corresponding to the source node (102) as a destination of the protocol data unit (400); and
the protocol data unit (400) subsequently following the round-trip path to the source node (102) via a first intermediate node (114, D) corresponding to the first intermediate routing address.

2. A method as claimed in Claim 1, wherein the first intermediate node (102) is the, at least notional, target node (114, D).

3. A method as claimed in Claim 1 or Claim 2, wherein the protocol data unit (400) is modified by at least part of a protocol stack after receipt of the protocol data unit (400), the modified protocol data unit (400) being subsequently processed by the second process (215).

4. A method as claimed in Claim 1, Claim 2 or Claim 3, further comprising:
adapting (322) the protocol data unit (400) after receipt thereof by the source node (102) so as to replace the first address identified as the source address with a target address corresponding to the, at least notional, target node (114, D).

5. A method as claimed in any one of the preceding claims, further comprising:
the second process (215) initiating generation (300, 302) of another protocol data unit identifying the first address as the source address;
adapting (310) the another protocol data unit prior to departure thereof so as to include a second data structure definition (406) for supporting the routing path selection;
using (310) the second data structure definition (406) to part-specify another round-trip path, the another round-trip having the source address corresponding to the source node (102) as the destination of the another protocol data unit; and
the another protocol data unit subsequently following the another round-trip path from the source node back (102) to the source node (102).

6. A method as claimed in Claim 5, wherein the another protocol data unit is generated in response to receipt of the protocol data unit (400).

7. A method as claimed in Claim 5 or Claim 6, wherein the another round-trip path is a reverse round-trip path with respect to the round-trip path.

8. A method as claimed in any one of Claims 2 to 7, wherein the another protocol data unit is modified by the at least part of the protocol stack after receipt of the another protocol data unit, the modified another protocol data unit being subsequently processed by the first process (215).

9. A method as claimed in any one of Claims 5 to 8, further comprising:
adapting (322) the another protocol data unit after receipt thereof by the source node (102) so as to replace identification of the first address as the source address with the target address corresponding to the, at least notional, target node (114).

10. A method as claimed in any one of the preceding claims, further comprising:
selecting the protocol data unit (400) prior to adapting the protocol data unit (400).

11. A method as claimed in Claim 10, wherein the protocol data unit (400) is selected based upon one or more attributes of the protocol data unit (400) selected from:
the source address;
the target address;
a next header type;
a payload type;
prior presence of a selected routing path;
a flow label;
a traffic class;
a transport layer port number; and/or
an inter-arrival time.

12. A method as claimed in any one of Claims 5 to 9, further comprising:
selecting the another protocol data unit prior to adapting the another protocol data unit.

13. A method as claimed in Claim 12, wherein the another protocol data unit is selected based upon one or more attributes of the another protocol data unit from:
the source address;
the target address;
a next header type;
a payload type; and/or
prior presence of a selected routing;
a flow label;
a traffic class;
a transport layer port number; and/or
an inter-arrival time.

14. A method as claimed in any one of Claims 1 to 4, further comprising:
after receipt of the protocol data unit (400), removing (322) a part of the protocol data unit conforming to the first data structure definition (406) for the routing path selection.

15. A method as claimed in any of Claims 1 to 13, further comprising:
including (310) a second intermediate routing address in a part of the protocol data unit conforming to the first data structure definition (406) for the routing path selection, thereby specifying a second intermediate node (108, 110) additional to the first intermediate node (114, D) in the round-trip path.

16. A method of testing performance of a networking application comprising the method of providing a communication as claimed in any one of the preceding claims.

17. A method of providing a communication between a first process (214) and a second process, the first process being at a source node, (102) and the second process (215) being at the source node in place of at an, at least notional, target node (114, D), the method **characterised by**:
providing the first and second processes (214, 215) at the source node (102);
the first process (214) initiating generation of (300, 302) a protocol data unit (400) identifying a second address corresponding to the, at least notional, target node (215);
adapting the protocol data unit (400) prior to departure and after receipt thereof so as to cause the protocol data unit (400) to follow a round-trip from the source node (102) via an intermediate node (114, D), but appear to the second process (215) to have been sent from a second address corresponding to the, at least notional, target node (114, D).

18. A system for providing a communication, the system **characterised by**:
a source node (102) supporting, when in use:
a first process (214), arranged to initiate generation (300, 302), when in use, of a protocol data unit (400) identifying a first address corresponding to the source node (102) as a source address;
a protocol stack; and
an outbound adaptation module (217) arranged to adapt, when in use, the protocol data unit (400) prior to departure thereof so as to include a first data structure definition (406) for supporting routing path selection, the outbound adaptation module (217) using the first data structure definition (406) to part-specify a round-trip path including a first intermediate routing address and having the first address corresponding to the source node (102) as a destination of the protocol data unit (400) so that the protocol data unit (400) subsequently follows the round-trip path to the source node (102) via the a first intermediate node corresponding to the first intermediate routing address (114, D), thereby providing the communication between the first process (214) and the second process, the first process being located at the source node (102) and the second process (215) being located at the source node in place of at an, at least notional, target node (114, D).

19. A network node apparatus (102) **characterised by**:
a first process (214) arranged to initiate, when in use, generation (300, 302) of a protocol data unit (400) identifying a first address corresponding to the network node apparatus (102) as a source address;
a protocol stack; and
an outbound adaptation module (217) arranged to adapt, when in use, the protocol data unit (400) prior to departure thereof so as to include a first data structure definition (406) for supporting routing path selection, the outbound adaptation module (217) using the first data structure definition (406) to part-specify a round-trip path including a first intermediate routing address and having the first address corresponding to the network node (102) apparatus as a destination of the protocol data unit (400) so that the protocol data unit (400) subsequently follows the round-trip path to the network node apparatus (102) via a first intermediate node (114, D) corresponding to the first intermediate routing address, thereby providing a communication between the first process (214) and the second process, the first process being located at the network node apparatus (102) and the second process (215) being located at the network node apparatus (102) in place of at an, at least notional, target node (114, D).
